# EUROPÄISCHE PATENTSCHRIFT

(11) **EP 2 627 919 B1**
(45) Veröffentlichungstag und Bekanntmachung des Hinweises auf die Patenterteilung: **03.12.2014**
(21) Anmeldenummer: 11734059.6
(22) Anmeldetag: 11.07.2011
(51) Int. Cl.: F16C 19/10, F16C 19/30, F16C 19/48, F16C 33/58, F16C 43/04, F16C 35/06

(54) **AXIALLAGERANORDNUNG**
AXIAL BEARING ASSEMBLY
ENSEMBLE PALIER AXIAL

(30) Priorität: 14.10.2010 DE 102010048479
(43) Veröffentlichungstag der Anmeldung: 21.08.2013
(73) Patentinhaber: Schaeffler Technologies GmbH & Co. KG, 91074 Herzogenaurach (DE)
(72) Erfinder: FUGEL, Wolfgang, 90453 Nürnberg (DE); KIRSCHNER, Andreas, 91086 Aurachtal (DE); REIMCHEN, Alexander, 91074 Herzogenaurach (DE); GEGNER, Martin, 91486 Uehlfeld (DE)
(86) Internationale Anmeldenummer: PCT/EP2011/061764
(87) Internationale Veröffentlichungsnummer: WO 2012/048918

(56) Entgegenhaltungen:
- EP-A1- 1 627 750
- WO-A1-2004/038243
- DE-A1- 10 306 926
- DE-A1- 19 750 805
- DE-A1-102008 016 880
- DE-T2-602005 001 069

## Beschreibung

### Gebiet der Erfindung

Die Erfindung betrifft eine Axiallageranordnung nach den oberbegriffsbildenden Merkmalen des Patentanspruchs 1, und sie insbesondere vorteilhaft für die beidseitige Axiallagerung des Planetenträgers eines Planetengetriebes in einem PKW-Automatikgetriebe mittels zweier Axialnadellager geeignet.

### Hintergrund der Erfindung

Die häufigste Ausführungsform von PKW-Automatikgetrieben sind sogenannte Wandlergetriebe, die sich von herkömmlichen und von automatisierten Schaltgetrieben vor allem durch einen zugkraftunterbrechungsfreien Schaltvorgang unterscheiden. Derartige PKW-Automatikgetriebe weisen zumeist einen hydraulischen Drehmomentenwandler als Anfahrkupplung auf und setzen sich im Wesentlichen aus mehreren Lamellenkupplungen sowie einer Kombination von mehreren Freiläufen und Planetengetrieben zusammen. Alle Schalt- und Kupplungsvorgänge erfolgen dabei über die Lamellenkupplungen, welche die kraftschlüssige Verbindung der einzelnen Planetengetriebestufen mit den Ein- und Ausgangswellen des Automatikgetriebes herstellen.

Da während der einzelnen Schaltvorgänge durch die zumeist schrägverzahnten Planetenräder der Planetengetriebe zwischen den Getriebebauteilen auch erhebliche Axialkräfte wirken, sind in modernen Automatikgetrieben zur Vermeidung von Reibungs- und Wirkungsgradverlusten die einzelnen Kupplungs- und Planetenträger je nach Anzahl der Schaltgänge durch bis zu 17 Axialnadellager gegeneinander abgestützt. In besonderen Fällen müssen dabei einzelne Kupplungs- oder Planetenträger sogar beidseitig gegen zwei weitere benachbarte Getriebebauteile axial gelagert werden. Für die Lagerung des Planetenträgers gegen das einerseits benachbarte Sonnenrad eines Planetengetriebes sowie gegen eine andererseits benachbarte Riemenscheibe ist beispielsweise aus der DE 60 2005 001 069 T2 eine Axiallageranordnung bekannt, die im Wesentlichen aus zwei herkömmlichen Axialnadellagern besteht, zwischen denen die kreisringförmige Seitenwand des Planetenträgers angeordnet ist. Dabei weist jedes der beiden Axialwälzlager in bekannter Weise eine, jeweils an einer der Axialseiten des Planetenträgers anliegende erste ringförmige Lagerscheibe und eine, jeweils am benachbarten Sonnenrad bzw. an der benachbarten Riemenscheibe befestigte zweite ringförmige Lagerscheibe auf, die jeweils aus einem dünneren und einem dickeren Stahlblech bestehen. Zwischen den axialen Innenseiten der Lagerscheiben rollt dabei eine Vielzahl in jeweils einer Reihe nebeneinander angeordneter Lagernadeln ab, die durch jeweils einen Lagerkäfig in gleichmäßigen Abständen zueinander gehalten werden und zusammen mit dem Lagerkäfig einen Nadelkranz bilden.

Bei der Montage derartiger Automatikgetriebe hat es sich in der Praxis jedoch gezeigt, dass das Einsetzen der Axialnadellager in die vorgesehenen Lagerstellen und das Einsetzen des durch die Axialnadellager gelagerten Trägerbauteils aufgrund der relativ vielen Einzelteile und der erforderlichen Präzision mitunter mit einem erheblichen Zeitaufwand verbunden und daher sehr kostenintensiv ist. Außerdem besteht bei der zumeist händischen Montage der beiden Axialnadellager die Gefahr, dass eines der Axialnadellager unbeabsichtigt weggelassen wird oder dass diese aufgrund ihrer gleichen Ausbildung und Größe auf der falschen Seite des zu lagernden Trägerbauteils und/oder deren Lagerscheiben seitenverkehrt an diesem montiert werden. Dadurch kann es zu kompletten Fehlmontagen kommen, die bereits bei Inbetriebnahme des Getriebes zu Fehlfunktionen führen oder es kann durch die unterschiedlichen Blechstärken der Lagerringe beider Axialnadellager im Betrieb des Automatikgetriebes zu Axialspannungen kommen, die zu einem verstärkten Verschleiß der Axialnadellager und damit zum vorzeitigen Ausfall des Getriebes führen.

### Aufgabe der Erfindung

Ausgehend von den dargelegten Nachteilen des bekannten Standes der Technik liegt der Erfindung deshalb die Aufgabe zu Grunde, eine Axiallageranordnung der beschriebenen Art zu konzipieren, bei der sicher gestellt ist, dass ein unbeabsichtigtes Weglassen eines der Axialwälzlager oder eine Fehlmontage der Axialwälzlager ausgeschlossen ist und für die der Aufwand zum Einsetzen des durch die Axialwälzlager gelagerten Trägerbauteils erheblich reduziert ist.

### Beschreibung der Erfindung

Erfindungsgemäß wird diese Aufgabe bei einer Axiallageranordnung nach dem Oberbegriff des Anspruchs 1 derart gelöst, dass am Innendurchmesser des kreisringförmigen Trägerbauteils zusätzliche Aussparungen angeordnet sind und die ersten Lagerscheiben beider Axialwälzlager über einen durch den Innendurchmesser des Trägerbauteil hindurch geführten Zentrierkragen an der einen ersten Lagerscheibe sowie über zu den Aussparungen am Trägerbauteil komplementäre Ausformungen am Zentrierkragen der einen ersten Lagerscheibe und über zu den Ausformungen am Zentrierkragen komplementäre Einformungen an der Innendurchmesserseite der anderen ersten Lagerscheibe fehlmontagesicher miteinander verbunden sowie verlier- und verdrehsicher am Trägerbauteil befestigt sind, so dass das Trägerbauteil zusammen mit den ersten Lagerscheiben und den an diesen fixierbaren Nadelkränzen oder zusammen mit den kompletten Axialwälzlagern als zwangsweise fehlerfrei vormontierbare Baueinheit ausgebildet ist.

Bevorzugte Ausgestaltungen und vorteilhafte Weiterbildungen der erfindungsgemäßen Axiallageranordnung werden in den Unteransprüchen beschrieben.

Danach ist es gemäß den Ansprüchen 2 und 3 bei der erfindungsgemäß ausgebildeten Axiallageranordnung vorgesehen, dass die axiale Länge des Zentrierkragens an der einen ersten Lagerscheibe größer als die axiale Breite des Trägerbauteils plus die Blechstärke der anderen ersten Lagerscheibe ausgebildet ist und dass der Außendurchmesser des Zentrierkragens an der einen ersten Lagerscheibe geringfügig kleiner als der jeweilige Innendurchmesser der anderen ersten Lagerscheibe und des Trägerbauteils ist. Eine derartige Dimensionierung der beiden ersten Lagerscheiben ist dabei Voraussetzung dafür, dass die beiden Axialwälzlager durch das Trägerbauteil hindurch miteinander verbunden werden können, wobei der verlängerte Zentrierkragen an der einen ersten Lagerscheibe des einen Axialwälzlagers in vorteilhafter Weise zugleich einen inneren Lagerbord für die Wälzkörper des anderen Axialwälzlagers bildet.

Nach Anspruch 4 ist es ein weiteres Merkmal der erfindungsgemäß ausgebildeten Axiallageranordnung, dass am freien Rand des Zentrierkragens an der einen ersten Lagerscheibe zwischen den Ausformungen mehrere radial nach außen gerichtete Rastnasen umfangsverteilt angeordnet sind, über welche die andere erste Lagerscheibe durch Aufklipsen auf dem Zentrierkragen der einen ersten Lagerscheibe fixierbar ist. Eine ausreichende Fixierung der anderen ersten Lagerscheibe auf dem Zentrierkragen der einen ersten Lagerscheibe ist dabei bereits durch drei in gleichem Winkelabstand zueinander angeordnete Rastnasen gewährleistet, die entweder als Prägungen oder als Körnerpunkte ausgebildet sein können und so auf dem Zentrierkragen angeordnet sind, dass der Abstand zwischen deren Unterseiten und der Axialseite des Trägerbauteils mindestens der Blechstärke der anderen ersten Lagerscheibe entspricht.

Eine zweckmäßige Weiterbildung der erfindungsgemäß ausgebildeten Axiallageranordnung ist es nach den Ansprüchen 5 und 6 desweiteren, dass die zusätzlichen Aussparungen am Innendurchmesser des Trägerbauteils die Form von Kreisringsegmenten aufweisen, die zur Vermeidung von Fehlmontagen der beiden ersten Lagerscheiben am Trägerteil unsymmetrisch über den Umfang des Innendurchmessers verteilt angeordnet sind. Als ausreichend hat es sich dabei erwiesen, drei solcher Aussparungen am Innendurchmesser des Trägerbauteils anzuordnen, die einen Winkelabstand von 110°, 120° und 130° des Vollkreises von 360° zueinander aufweisen. Möglich wäre es jedoch auch, mehr als drei dieser Aussparungen in ebenfalls unsymmetrischen Winkelabständen zueinander am Innendurchmesser des Trägerbauteils anzuordnen. Darüber hinaus ist es von Vorteil, jede der Aussparungen zusätzlich mit verschiedenen Segmentlängen auszubilden, um somit Fehlmontagen der beiden ersten Lagerscheiben am Trägerbauteil absolut sicher auszuschließen.

Gemäß Anspruch 7 zeichnet sich die erfindungsgemäß ausgebildete Axiallageranordnung darüber hinaus noch dadurch aus, dass die zu den Aussparungen am Trägerteil komplementären Ausformungen am Zentrierkragen der einen ersten Lagerscheibe als radial aus dessen Außendurchmesserseite ausgestellte Prägungen ausgebildet sind, welche die gleiche Anzahl und Umfangsverteilung wie die Aussparungen am Trägerbauteil aufweisen. Unter komplementärer Ausbildung zu den Aussparungen am Zentrierteil ist dabei zu verstehen, dass die Prägungen die gleiche Querschnittsform und die gleiche Umfangslänge wie die Aussparungen am Trägerteil aufweisen und sich vorteilhafterweise über die gesamte axiale Länge des Zentrierkragens erstrecken, wobei jedoch auch Prägungen denkbar wären, die nur in den freien Rand des Zentrierkragens eingearbeitet sind. Die komplementäre Ausbildung der Prägungen am Zentrierkragen der einen ersten Lagerscheibe in gleicher Anzahl und Umfangsverteilung wie die Aussparungen am Trägerbauteil bewirkt dann, dass die eine erste Lagerscheibe des einen Axialwälzlagers nur an der richtigen Seite des Trägerbauteils in nur einer einzigen möglichen Winkelstellung mit ihrem Zentrierkragen in das Trägerbauteil eingeschoben werden kann und zugleich verdrehgesichert am Trägerbauteil angeordnet ist.

Ein weiteres Merkmal der erfindungsgemäß ausgebildeten Axiallageranordnung ist es nach Anspruch 8, dass die zu den Ausformungen am Zentrierkragen komplementären Einformungen an der Innendurchmesserseite der anderen ersten Lagerscheibe als radiale Ausklinkungen ausgebildet sind, welche die gleiche Anzahl aber eine spiegelverkehrte Umfangsverteilung wie die Ausformungen an der einen ersten Lagerscheibe aufweisen. Auch diese in Querschnittsform und Umfangslänge mit den Prägungen am Zentrierkragen gleiche Ausbildung der radialen Ausklinkungen hat den Zweck, dass die zweite erste Lagerscheibe des anderen Axialwälzlagers nur mit ihrer richtigen Axialseite voran in nur einer einzigen möglichen Winkelstellung auf den aus dem Trägerteil herausragenden Teil des Zentrierkragens an der einen ersten Lagerscheibe aufgeschoben werden kann und zugleich verdrehgesichert zu dieser und zum Trägerbauteil angeordnet ist.

Schließlich wird es als vorteilhafte Ausgestaltung der erfindungsgemäß ausgebildeten Axiallageranordnung durch Anspruch 9 noch vorgeschlagen, dass zur Vermeidung von Beschädigungen der Rastnasen am Zentrierkragen der einen ersten Lagerscheibe am Innendurchmesser des Trägerbauteils weitere Ausnehmungen angeordnet sind. Diese weiteren Ausnehmungen sind entsprechend der Anzahl, der Größe und der Umfangsverteilung der Rastnasen bevorzugt halbkreisförmig ausgebildet und derart am Innendurchmesser des Trägerbauteils angeordnet, dass die Rastnasen am Zentrierkragen der einen ersten Lagerscheibe bei deren Montage am Trägerbauteil ohne Berührungen durch den Innendurchmesser des Trägerbauteils hindurch führbar sind.

Zusammenfassend weist die erfindungsgemäß ausgebildete Axiallageranordnung somit gegenüber den aus dem Stand der Technik bekannten Axiallageranordnungen mit zwei Axialwälzlagern den Vorteil auf, dass das Trägerbauteil und die Lagerscheiben der zugehörigen Axialwälzlager durch die Ausbildung mit zusätzlichen Ein- und Ausformungen eine eindeutige und unverwechselbare Montagezuordnung zueinander aufweisen, durch die Fehlmontagen jeglicher Art praktisch ausgeschlossen sind. Dadurch wird mit der erfindungsgemäßen Axiallageranordnung das in der Technik stets angestrebte japanische Poka Yoke Prinzip verwirklicht, welches bekanntermaßen technische Vorkehrungen bzw. Einrichtungen zur sofortigen Fehleraufdeckung und -verhinderung umfasst. Gleichzeitig werden die beiden Axialwälzlager über den Zentrierkragen an der einen ersten Lagerscheibe eines Axialwälzlagers in vorteilhafter Weise miteinander verbunden, so dass die gesamte Axiallageranordnung als außerhalb des vorgesehenen Einbauortes vormontierbare und verliersichere Baueinheit ausgebildet ist. Da eine solche vormontierte Baueinheit weniger Einzelteile aufweist und weniger Montagepräzision erfordert, ist deren Montage auch mit einem geringeren Zeitaufwand verbunden und daher sehr kostengünstig.

### Kurze Beschreibung der Zeichnungen

Eine bevorzugte Ausführungsform der erfindungsgemäß ausgebildeten Axiallageranordnung wird nachfolgend unter Bezugnahme auf die beigefügten Zeichnungen näher erläutert. Dabei zeigen:
- Figur 1: eine Explosionsdarstellung der längs geschnittenen Einzelteile der erfindungsgemäß ausgebildeten Axiallageranordnung;
- Figur 2: eine vergrößerte Darstellung einer Draufsicht auf die erfindungsgemäß ausgebildete Axiallageranordnung;
- Figur 3: den Schnitt A - A nach Figur 2 durch die erfindungsgemäß ausgebildete Axiallageranordnung;
- Figur 4: eine vergrößerte Darstellung der Einzelheit X im Schnitt A - A gemäß Figur 3;
- Figur 5: eine vergrößerte Darstellung der Einzelheit Y im Schnitt A - A gemäß Figur 3.

### Ausführliche Beschreibung der Zeichnungen

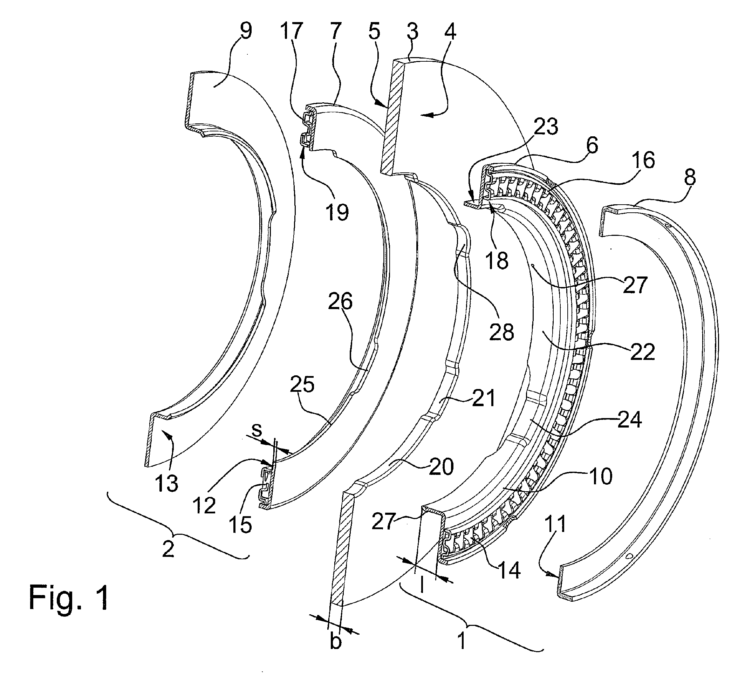

Aus Figur 1 geht eine für ein PKW-Automatikgetriebe vorgesehene Axiallageranordnung hervor, die im Wesentlichen aus zwei Axialwälzlagern 1, 2 besteht, zwischen denen ein beispielsweise als Planetenträger ausgebildetes kreisringförmiges Trägerbauteil 3 angeordnet ist. Deutlich sichtbar weist dabei jedes der Axialwälzlager 1, 2 eine, jeweils an einer der Axialseiten 4, 5 des Trägerbauteils 3 anliegende erste ringförmige Lagerscheibe 6, 7 und eine, jeweils zur Befestigung an axial beidseitig des Trägerbauteils 3 angeordneten weiteren Bauteilen der Umgebungskonstruktion vorgesehene zweite ringförmige Lagerscheibe 8, 9 auf, die jeweils aus einem dünnen Stahlblech bestehen. Zwischen den axialen Innenseiten 10, 11 und 12, 13 der Lagerscheiben 6, 7, 8, 9 rollen zudem eine Vielzahl nebeneinander angeordneter Wälzkörper 14, 15 ab, die durch jeweils einen Lagerkäfig 16, 17 in gleichmäßigen Abständen zueinander gehalten werden und zusammen mit diesem jeweils einen Nadelkranz 18, 19 bilden.

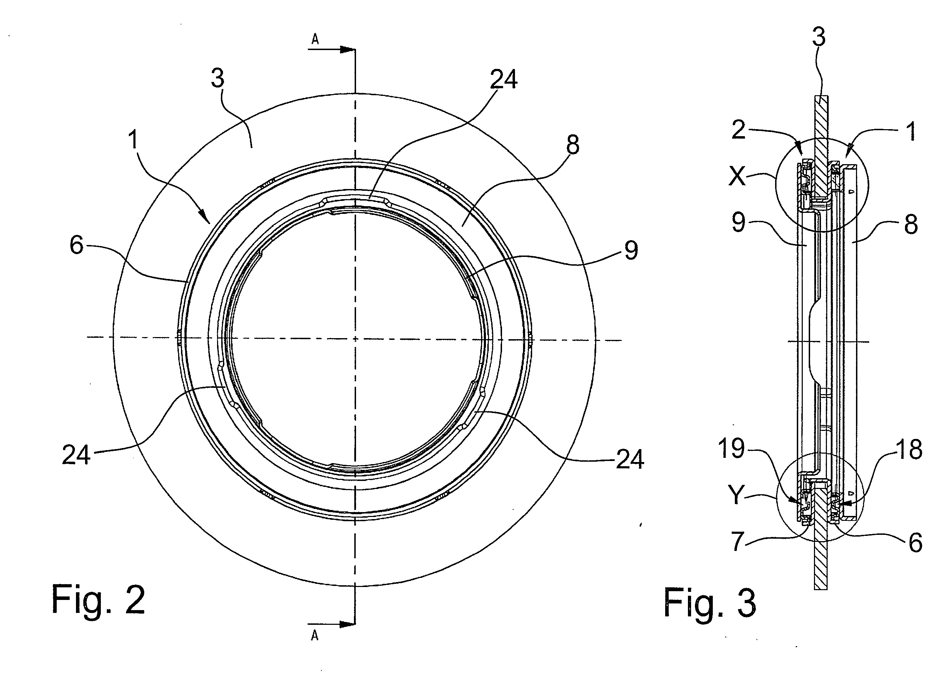

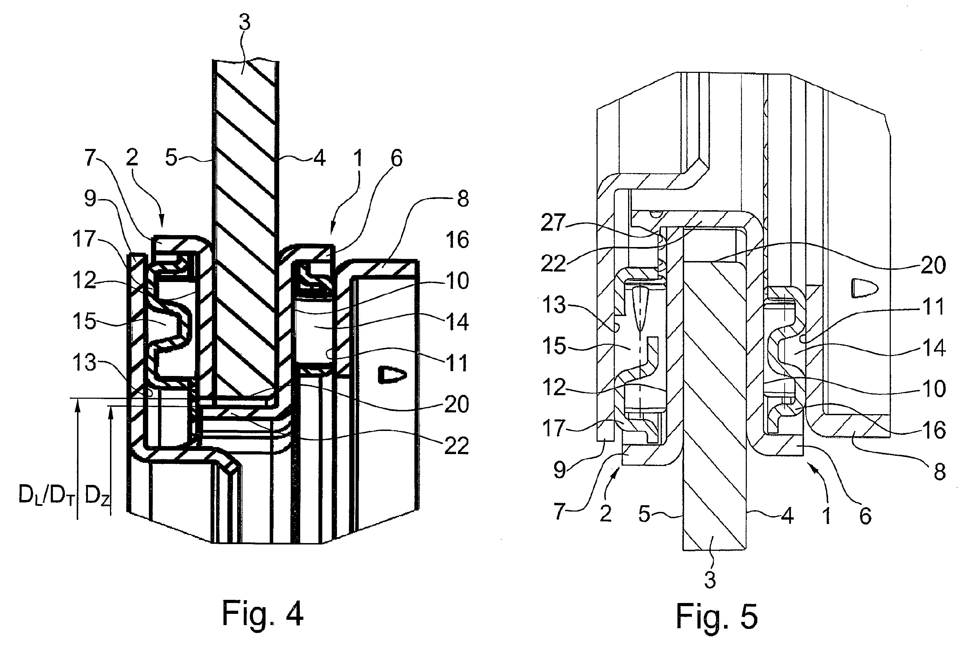

Desweiteren ist in Figur 1 in Verbindung mit den Figuren 2 und 3 zu sehen, dass am Innendurchmesser 20 des kreisringförmigen Trägerbauteils 3 erfindungsgemäß mehrere zusätzliche Aussparungen 21 angeordnet sind und die ersten Lagerscheiben 6, 7 beider Axialwälzlager 1, 2 über einen durch den Innendurchmesser 20 des Trägerbauteil 3 hindurch geführten Zentrierkragen 22 an der einen ersten Lagerscheibe 6 miteinander verbunden sowie verlier- und verdrehsicher am Trägerbauteil 3 befestigt sind. Um bei dieser Verbindung Fehlmontagen auszuschließen sind dabei am Zentrierkragen 22 der einen ersten Lagerscheibe 6 zu den Aussparungen 21 am Trägerbauteil 3 komplementäre Ausformungen 24 und an der Innendurchmesserseite 25 der anderen ersten Lagerscheibe 7 zu den Ausformungen 24 am Zentrierkragen 22 komplementäre Einformungen 26 angeordnet. Wie in Figur 1 angedeutet, ist dabei die axiale Länge I des Zentrierkragens 22 an der einen ersten Lagerscheibe 6 größer als die axiale Breite b des Trägerbauteils 3 plus die Blechstärke s der anderen ersten Lagerscheibe 7 ausgebildet, während der Außendurchmesser D_{Z} des Zentrierkragens 22 an der einen ersten Lagerscheibe 6, wie in Figur 4 gezeigt, geringfügig kleiner als der jeweilige Innendurchmesser D_{L}, D_{T} der anderen ersten Lagerscheibe 7 und des Trägerbauteils 3 ist.

Weiterhin ist aus Figur 1 ersichtlich, dass am freien Rand des Zentrierkragens 22 an der einen ersten Lagerscheibe 6 zwischen den Ausformungen 24 mehrere und radial nach außen gerichtete Rastnasen 27 gleichmäßig umfangsverteilt angeordnet sind. Diese, in Figur 5 deutlich gezeigten Rastnasen 27 sind als drei in gleichem Winkelabstand zueinander angeordnete Prägungen ausgebildet und dienen dazu, die andere erste Lagerscheibe 7 durch Aufklipsen auf dem Zentrierkragen 22 der einen ersten Lagerscheibe 6 zu fixieren.

Ebenso wird durch Figur 1 deutlich, dass die zusätzlichen Aussparungen 21 am Innendurchmesser 20 des Trägerbauteils 3 die Form von Kreisringsegmenten aufweisen, die zur Vermeidung von Fehlmontagen der beiden ersten Lagerscheiben 6, 7 am Trägerteil 3 unsymmetrisch über den Umfang des Innendurchmessers 20 verteilt angeordnet sind. Als ausreichend hat es sich dabei erwiesen, drei solcher Aussparungen 21 am Innendurchmesser 20 des Trägerbauteils 3 anzuordnen, die einen Winkelabstand von 110°, 120° und 130° des Vollkreises von 360° zueinander aufweisen. Um jedoch Fehlmontagen der beiden ersten Lagerscheiben 6, 7 am Trägerbauteil 3 mit absoluter Sicherheit auszuschließen, ist darüber hinaus jede der Aussparungen 21 zusätzlich mit verschiedenen Segmentlängen ausgebildet.

Außerdem geht aus Figur 1 hervor, dass die zu den Aussparungen 21 am Trägerteil 3 komplementären Ausformungen 24 am Zentrierkragen 22 der einen ersten Lagerscheibe 6 als ebenfalls radial aus dessen Außendurchmesserseite 23 ausgestellte Prägungen ausgebildet sind, welche die gleiche Anzahl und Umfangsverteilung wie die Aussparungen 21 am Trägerbauteil 3 aufweisen. Eine derartige Ausbildung der Prägungen am Zentrierkragen 22 der einen ersten Lagerscheibe 6 gewährleistet, dass die eine erste Lagerscheibe 6 des einen Axialwälzlagers 1 beispielsweise nur von der in der Zeichnung rechten Seite des Trägerbauteils 3 und nur in einer einzigen möglichen Winkelstellung mit ihrem Zentrierkragen 22 in das Trägerbauteil 3 eingeschoben werden kann und dabei zugleich am Trägerbauteil 3 verdrehgesichert wird.

Die zu den Ausformungen 24 am Zentrierkragen 22 komplementären Einformungen 26 an der Innendurchmesserseite 25 der anderen ersten Lagerscheibe 7 sind dagegen, wie ebenfalls in Figur 1 zu sehen ist, als radiale Ausklinkungen ausgebildet, welche die gleiche Anzahl aber eine spiegelverkehrte Umfangsverteilung wie die Ausformungen 24 an der einen ersten Lagerscheibe 6 aufweisen. Auch diese in Querschnittsform und Umfangslänge mit den Prägungen am Zentrierkragen 22 gleiche Ausbildung der radialen Ausklinkungen hat den Zweck, dass die zweite erste Lagerscheibe 7 des anderen Axialwälzlagers 2 nur mit der in der Zeichnung sichtbare Axialseite voran in nur einer einzigen möglichen Winkelstellung auf den aus dem Trägerteil 3 herausragenden Zentrierkragen 22 an der einen ersten Lagerscheibe 6 aufgeschoben werden kann und zugleich verdrehgesichert zu dieser und zum Trägerbauteil 3 angeordnet ist.

Schließlich ist in Figur 1 auch noch erkennbar, dass am Innendurchmesser 20 des Trägerbauteils 3 zwischen den Aussparungen 21 noch weitere Ausnehmungen 28 angeordnet sind, die eine halbkreisförmige Ausbildung aufweisen. Diese Ausnehmungen 28 dienen in vorteilhafter Weise der Vermeidung von Beschädigungen der Rastnasen 27 am Zentrierkragen 22 der einen ersten Lagerscheibe 6 bei deren Montage am Trägerteil 3 und sind der Anzahl und Umfangsverteilung der Rastnasen 27 entsprechend am Innendurchmesser 20 des Trägerbauteils 3 angeordnet, so dass die Rastnasen 26 ohne Berührungen durch das Trägerbauteil 3 hindurch führbar sind.

**Bezugszahlenliste**

| | | | |
|---|---|---|---|
| 1 | Axialwälzlager | 18 | Nadelkranz von 1 |
| 2 | Axialwälzlager | 19 | Nadelkranz von 2 |
| 3 | Trägerbauteil | 20 | Innendurchmesser von 3 |
| 4 | Axialseite von 3 | 21 | Aussparungen in 20 |
| 5 | Axialseite von 3 | 22 | Zentrierkragen an 6 |
| 6 | erste Lagerscheibe von 1 | 23 | Außendurchmesserseite von 22 |
| 7 | erste Lagerscheibe von 2 | 24 | Ausformungen in 23 |
| 8 | zweite Lagerscheibe von 1 | 25 | Innendurchmesserseite von 7 |
| 9 | zweite Lagerscheibe von 2 | 26 | Einformungen in 25 |
| 10 | Innenseite von 6 | 27 | Rastnasen an 22 |
| 11 | Innenseite von 7 | 28 | weitere Ausnehmungen in 20 |
| 12 | Innenseite von 8 | l | Länge von 22 |
| 13 | Innenseite von 9 | b | Breite von 3 |
| 14 | Wälzkörper von 1 | s | Blechstärke von 7 |
| 15 | Wälzkörper von 2 | D_{Z} | Außendurchmesser von 22 |
| 16 | Lagerkäfig von 1 | D_{L} | Innendurchmesser von 7 |
| 17 | Lagerkäfig von 2 | D_{T} | Innendurchmesser von 3 |

## Patentansprüche

1. Axiallageranordnung, im Wesentlichen bestehend aus zwei Axialwälzlagern (1, 2), zwischen denen ein kreisringförmiges Trägerbauteil (3) angeordnet ist, wobei jedes der Axialwälzlager (1, 2) eine, jeweils an einer der Axialseiten (4, 5) des Trägerbauteils (3) anliegende erste ringförmige Lagerscheibe (6, 7) und eine, jeweils zur Befestigung an axial beidseitig des Trägerbauteils (3) angeordneten weiteren Bauteilen der Umgebungskonstruktion vorgesehene zweite ringförmige Lagerscheibe (8, 9) aufweist, die jeweils aus einem dünnen Stahlblech bestehen und zwischen deren axialen Innenseiten (10, 11 und 12, 13) eine Vielzahl nebeneinander angeordneter Wälzkörper (14, 15) abrollen, die durch jeweils einen Lagerkäfig (16, 17) in gleichmäßigen Abständen zueinander gehalten werden und zusammen mit diesem jeweils einen Nadelkranz (18, 19) bilden, **dadurch gekennzeichnet, dass** am Innendurchmesser (20) des kreisringförmigen Trägerbauteils (3) zusätzliche Aussparungen (21) angeordnet sind und die ersten Lagerscheiben (6, 7) beider Axialwälzlager (1, 2) über einen durch den Innendurchmesser (20) des Trägerbauteil (3) hindurch geführten Zentrierkragen (22) an der einen ersten Lagerscheibe (6) sowie über zu den Aussparungen (21) am Trägerbauteil (3) komplementäre Ausformungen (24) am Zentrierkragen (22) der einen ersten Lagerscheibe (6) und über zu den Ausformungen (24) am Zentrierkragen (22) komplementäre Einformungen (26) an der Innendurchmesserseite (25) der anderen ersten Lagerscheibe (7) fehlmontagesicher miteinander verbunden sowie verlier- und verdrehsicher am Trägerbauteil (3) befestigt sind, so dass das Trägerbauteil (3) zusammen mit den ersten Lagerscheiben (6, 7) und den an diesen fixierbaren Nadelkränzen (18, 19) oder zusammen mit den kompletten Axialwälzlagern (1, 2) als zwangsweise fehlerfrei vormontierbare Baueinheit ausgebildet ist.

2. Axiallageranordnung nach Anspruch 1, **dadurch gekennzeichnet, dass** die axiale Länge (l) des Zentrierkragens (22) an der einen ersten Lagerscheibe (6) größer als die axiale Breite (b) des Trägerbauteils (3) plus die Blechstärke (s) der anderen ersten Lagerscheibe (7) ausgebildet ist.

3. Axiallageranordnung nach Anspruch 2, **dadurch gekennzeichnet, dass** der Außendurchmesser (D_{Z}) des Zentrierkragens (22) an der einen ersten Lagerscheibe (6) geringfügig kleiner als der jeweilige Innendurchmesser (D_{L}, D_{T}) der anderen ersten Lagerscheibe (7) und des Trägerbauteils (3) ist.

4. Axiallageranordnung nach Anspruch 3, **dadurch gekennzeichnet, dass** am freien Rand des Zentrierkragens (22) an der einen ersten Lagerscheibe (6) zwischen den Ausformungen (24) mehrere und radial nach außen gerichtete Rastnasen (27) gleichmäßig umfangsverteilt angeordnet sind, über welche die andere erste Lagerscheibe (7) durch Aufklipsen auf dem Zentrierkragen (22) der einen ersten Lagerscheibe (6) fixierbar ist.

5. Axiallageranordnung nach Anspruch 4, **dadurch gekennzeichnet, dass** die zusätzlichen Aussparungen (21) am Innendurchmesser (20) des Trägerbauteils (3) die Form von Kreisringsegmenten aufweisen, die zur Vermeidung von Fehlmontagen der beiden ersten Lagerscheiben (6, 7) am Trägerteil (3) unsymmetrisch über den Umfang des Innendurchmessers (20) verteilt angeordnet sind und verschiedene Segmentlängen aufweisen.

6. Axiallageranordnung nach Anspruch 5, **dadurch gekennzeichnet, dass** bevorzugt drei Aussparungen (21) am Innendurchmesser (20) des Trägerbauteils (3) angeordnet sind, die einen Winkelabstand von 110°, 120° und 130° des Vollkreises von 360° zueinander aufweisen.

7. Axiallageranordnung nach Anspruch 5, **dadurch gekennzeichnet, dass** die zu den Aussparungen (21) am Trägerteil (3) komplementären Ausformungen (24) am Zentrierkragen (22) der einen ersten Lagerscheibe (6) als radial aus dessen Außendurchmesserseite (23) ausgestellte Prägungen ausgebildet sind, welche die gleiche Anzahl und Umfangsverteilung wie die Aussparungen (21) am Trägerbauteil (3) aufweisen.

8. Axiallageranordnung nach Anspruch 7, **dadurch gekennzeichnet, dass** die zu den Ausformungen (24) am Zentrierkragen (22) komplementären Einformungen (26) an der Innendurchmesserseite (25) der anderen ersten Lagerscheibe (7) als radiale Ausklinkungen ausgebildet sind, welche die gleiche Anzahl aber eine spiegelverkehrte Umfangsverteilung wie die Ausformungen (24) an der einen ersten Lagerscheibe (6) aufweisen.

9. Axiallageranordnung nach Anspruch 8, **dadurch gekennzeichnet, dass** zur Vermeidung von Beschädigungen der Rastnasen (27) am Zentrierkragen (22) der einen ersten Lagerscheibe (6) am Innendurchmesser (20) des Trägerbauteils (3) weitere, der Anzahl und Umfangsverteilung der Rastnasen (27) entsprechende Ausnehmungen (28) angeordnet sind, durch welche die Rastnasen (26) durch das Trägerbauteil (3) hindurch führbar sind.

## Claims

1. Axial bearing assembly, essentially consisting of two axial rolling bearings (1, 2), between which an annular carrier component (3) is arranged, each of the axial rolling bearings (1, 2) having a first annular bearing disc (6, 7), bearing in each case against one of the axial sides (4, 5) of the carrier component (3), and a second annular bearing disc (8, 9), intended in each case to be fastened to further components of the surrounding structure which are arranged axially on both sides of the carrier component (3), which bearing discs consist in each case of a thin steel sheet and between the axial insides (10, 11 and 12, 13) of which bearing discs roll a multiplicity of rolling bodies (14, 15) which are arranged next to one another and which are held at uniform distances from one another in each case by means of a bearing cage (16, 17) and together with the latter form in each case a needle ring (18, 19), **characterized in that** additional clearances (21) are arranged on the inside diameter (20) of the annular carrier component (3), and the first bearing discs (6, 7) of the two axial rolling bearings (1, 2) are connected to one another, safe against incorrect mounting, via a centring collar (22), lead through the inside diameter (20) of the carrier component (3) on the one first bearing disc (6) and via shaped-out portions (24), complementary to the clearances (21) on the carrier component (3), on the centring collar (22) of the one first bearing disc (6) on via shaped-in portions (26), complementary to the shaped-out portions (24) on the centring collar (22), on the inside diameter side (25) of the other first bearing disc (7) and are fastened to the carrier component (3) in a captive and anti-twist manner, so that the carrier component (3), together with the first bearing discs (6, 7) and the needle rings (18, 19) fixable to these or together with the complete axial rolling bearings (1, 2), is formed as a structural unit necessarily premountable in a fault-free manner.

2. Axial bearing arrangement according to Claim 1, **characterized in that** the axial length (l) at the centring collar (22) on the one first bearing disc (6) is greater than the axial width (b) of the carrier component (3) plus the sheet thickness (s) of the other first bearing disc (7).

3. Axial bearing arrangement according to Claim 2, **characterized in that** the outside diameter (D_{Z}) of the centring collar (22) on the one first bearing disc (6) is slightly smaller than the respective inside diameter (D_{L}, D_{T}) of the other first bearing disc (7) and of the carrier component (3).

4. Axial bearing arrangement according to Claim 3, **characterized in that** a plurality of radially outward-directed latching noses (27) are arranged, uniformly distributed circumferentially, along the free margin of the centring collar (22) and the one first bearing disc (6) between the shaped-out portions (24), via which latching noses the other first bearing disk (7) can be fixed to the centring collar (22) of the one first bearing disc (6) by being snapped on.

5. Axial bearing arrangement according to Claim 4, **characterized in that** the additional clearances (21) on the inside diameter (20) of the carrier component (3) are in the form of annular segments which, to avoid incorrect mountings of the two first bearing discs (6, 7) on the carrier part (3), are arranged so as to be distributed asymmetrically over the circumference of the inside diameter (20) and have different segment lengths.

6. Axial bearing arrangement according to Claim 5, **characterized in that** preferably three clearances (21) are arranged on the inside diameter (20) of the carrier component (3) and have an angular spacing of 110°, 120° and 130° of a full circle of 360° from one another.

7. Axial bearing arrangement according to Claim 5, **characterized in that** the shaped-out portions (24), complementary to the clearances (21) on the carrier part (3), on the centring collar (22) of the one first bearing disc (6) are formed as embossings which are set radially from the outside diameter side (23) of the said centring collar and which have the same number and circumferential distribution as the clearances (21) on the carrier component (3).

8. Axial bearing arrangement according to Claim 7, **characterized in that** the shaped-in portions (26), complementary to the shaped-out portions (24) on the centring collar (22), on the inside diameter side (25) of the other first bearing disc (7) are formed as radial indentations which have the same number as, but a mirror-inverted circumferential distribution of, the shaped-out portions (24) on the one first bearing disc (6).

9. Axial bearing arrangement according to Claim 8, **characterized in that**, to avoid damage to the latching noses (27) on the centring collar (22) of the one first bearing disc (6), further recesses (28) corresponding to the number and circumferential distribution of the latching noses (27) are arranged on the inside diameter (20) of the carrier component (3), by means of which recesses the latching noses (26) can be led through the carrier component (3).

## Revendications

1. Agencement de palier axial, constitué essentiellement de deux paliers à roulements axiaux (1, 2) entre lesquels est disposé un composant de support (3) en forme de bague circulaire, chacun des paliers à roulements axiaux (1, 2) présentant un premier disque de palier de forme annulaire (6, 7) s'appliquant à chaque fois contre l'un des côtés axiaux (4, 5) du composant de support (3), et un deuxième disque de palier de forme annulaire (8, 9) prévu à chaque fois pour la fixation à d'autres composants de la construction environnante disposés axialement de chaque côté du composant de support (3), lesquels disques de palier se composent chacun d'une tôle d'acier mince et une pluralité de corps de roulement disposés les uns à côté des autres (14, 15) roulant entre leurs côtés internes axiaux (10, 11 et 12, 13), lesquels corps de roulement sont retenus les uns par rapport aux autres à intervalles uniformes par une cage de palier respective (16, 17) et forment conjointement avec celle-ci une couronne d'aiguille respective (18, 19), **caractérisé en ce que** des évidements supplémentaires (21) sont disposés sur le diamètre intérieur (20) du composant de support (3) en forme de bague circulaire et les premiers disques de palier (6, 7) des deux paliers à roulements axiaux (1, 2) sont connectés l'un à l'autre sans erreur de montage possible par le biais d'un collet de centrage (22) guidé à travers le diamètre intérieur (20) du composant de support (3) sur l'un des premiers disques de palier (6) ainsi que par le biais de formations en saillie (24) complémentaires aux évidements (21) sur le composant de support (3), sur le collet de centrage (22) dudit premier disque de palier (6) et par le biais de formations en retrait (26) complémentaires aux formations en saillie (24) sur le collet de centrage (22) sur le diamètre intérieur (25) de l'autre premier disque de palier (7) et sont fixés de manière imperdable et fixés en rotation sur le composant de support (3), de telle sorte que le composant de support (3), conjointement avec les premiers disques de palier (6, 7) et les couronnes d'aiguilles (18, 19) pouvant être fixés à ceux-ci ou conjointement avec les paliers à roulements axiaux complets (1, 2), soit réalisé sous forme d'unité structurelle pouvant être prémontée sans possibilité d'erreur.

2. Agencement de palier axial selon la revendication 1, **caractérisé en ce que** la longueur axiale (1) du collet de centrage (22) au niveau de l'un des premiers disques de palier (6) est supérieure à la largeur axiale (b) du composant de support (3) plus l'épaisseur de tôle (s) de l'autre premier disque de palier (7).

3. Agencement de palier axial selon la revendication 2, **caractérisé en ce que** le diamètre extérieur (D_{Z}) du collet de centrage (22) au niveau de l'un des premiers disques de palier (6) est légèrement inférieur au diamètre intérieur respectif (D_{L}, D_{T}) de l'autre premier disque de palier (7) et du composant de support (3).

4. Agencement de palier axial selon la revendication 3, **caractérisé en ce qu'**au bord libre du collet de centrage (22) au niveau de l'un des premiers disques de palier (6) entre les formations en saillie (24), sont disposés de manière répartie sur la périphérie plusieurs ergots d'encliquetage (27) orientés radialement vers l'extérieur, par le biais desquels l'autre premier disque de palier (7) peut être fixé par encliquetage sur le collet de centrage (22) dudit premier disque de palier (6).

5. Agencement de palier axial selon la revendication 4, **caractérisé en ce que** les évidements supplémentaires (21) au niveau du diamètre intérieur (20) du composant de support (3) présentent la forme de segments annulaires circulaires qui sont disposés de manière répartie sur la périphérie du diamètre intérieur (20) de manière asymétrique pour éviter des erreurs de montage des deux premiers disques de palier (6, 7) sur la partie de support (3) et qui présentent des longueurs de segments différentes.

6. Agencement de palier axial selon la revendication 5, **caractérisé en ce que** de préférence trois évidements (21) sont disposés sur le diamètre intérieur (20) du composant de support (3), lesquels présentent un espacement angulaire les uns par rapport aux autres de 110°, 120° et 130° du cercle complet de 360°.

7. Agencement de palier axial selon la revendication 5, **caractérisé en ce que** les formations en saillie (24) complémentaires aux évidements (21) sur la partie de support (3) sur le collet de centrage (22) de l'un des premiers disques de palier (6) sont réalisées sous forme de gaufrages saillant radialement hors de leur côté de diamètre extérieur (23), qui présentent le même nombre et la même répartition périphérique que les évidements (21) sur le composant de support (3).

8. Agencement de palier axial selon la revendication 7, **caractérisé en ce que** les formations en retrait (26) complémentaires aux formations en saillie (24) sur le collet de centrage (22) sur le côté du diamètre intérieur (25) de l'autre premier disque de palier (7) sont réalisées sous forme d'encoches radiales dont le nombre est identique à celui des formations en saillie (24) sur ledit premier disque de palier (6) mais qui présentent une répartition périphérique inversée symétriquement par rapport à celles-ci.

9. Agencement de palier axial selon la revendication 8, **caractérisé en ce que** pour éviter des endommagements des ergots d'encliquetage (27) sur le collet de centrage (22) de l'un des premiers disques de palier (6) sur le diamètre intérieur (20) du composant de support (3), d'autres évidements (28) correspondant au nombre et à la répartition périphérique des ergots d'encliquetage (27) sont prévus, lesquels permettent de guider les ergots d'encliquetage (26) à travers le composant de support (3).
